Europäisches Patentamt

European Patent Office

Office européen des brevets

(19)

(11) **EP 0 884 466 A1**

(12) # DEMANDE DE BREVET EUROPEEN

(43) Date de publication:
**16.12.1998 Bulletin 1998/51**

(51) Int Cl.6: **F02D 41/22**, F02M 25/07,
F02D 21/08

(21) Numéro de dépôt: **98401434.0**

(22) Date de dépôt: **12.06.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **13.06.1997 FR 9707374**

(71) Demandeur: **RENAULT**
**92109 Boulogne-Billancourt (FR)**

(72) Inventeurs:
• **Bubel, Gérard**
**91650 Breuillet (FR)**
• **Oliver, Pierre-Michel**
**91190 Gif-sur-Yvette (FR)**

(74) Mandataire: **Fernandez, Francis Lionel**
**RENAULT,**
**860, Quai de Stalingrad,**
**S. 0267-TPZ-OJ2-1.10**
**92109 Boulogne-Billancourt (FR)**

(54) **Procédé et dispositif de correction de la richesse d'un moteur à combustion interne**

(57) L'invention concerne un procédé et un dispositif de correction de la richesse du mélange air-carburant dans un moteur à injection pilotée électroniquement en fonction du régime moteur et de la pression collecteur, et équipé d'un système de recirculation des gaz d'échappement (EGR), avec une vanne dotée d'un capteur de position, consistant à mesurer la levée (L) de la vanne (1) par le capteur (3) et à traiter cette valeur mesurée par le calculateur d'injection, avec la commande de levée cartographiée en fonction du point de fonctionnement du moteur qui délivre, en cas de détection du bon fonctionnement dudit système EGR, une consigne de levée de correction de richesse ($C_R$) selon deux premières cartographies, et en cas de détection d'une panne du système EGR, une correction de consigne de richesse ($C_{Ri}$) calculée en fonction de la levée mesurée pour chaque point de fonctionnement du moteur.

FIG_7

## Description

L'invention concerne un procédé et un dispositif de correction de la richesse du mélange air-carburant introduit dans un moteur à combustion interne dont l'injection de carburant est pilotée électroniquement, dans le cas particulier de l'utilisation d'un système de recirculation des gaz d'échappement (EGR : "Exhaust Gas Recirculation" en vocable anglo-saxon) dans le collecteur d'admission d'air.

Dans le cas d'un moteur à injection du carburant contrôlée par un calculateur électronique, selon une loi établie à partir du régime moteur et de pression dans le collecteur, l'introduction d'une partie des gaz d'échappement dans le collecteur d'admission d'air, obtenue par une vanne d'EGR placée entre le circuit d'échappement des gaz brûlés et le collecteur d'admission d'air, et pilotée par le calculateur d'injection, entraîne une augmentation de la pression collecteur qui engendre elle-même une augmentation du temps d'injection, donc de la richesse. Cette évolution de la richesse n'est pas souhaitable car les gaz d'échappement réinjectés sont des gaz inertes sans oxygène, qui ne participent donc pas à la combustion. Leur intérêt est dû au fait qu'ils provoquent un abaissement de la température de combustion, qui réduit le taux des oxydes d'azote émis à l'échappement et améliore donc les performances d'anti-pollution du véhicule. Par contre, ce système de recirculation des gaz d'échappement ralentit la combustion, causant des instabilités au moteur. Et dans le cas d'un taux d'EGR trop élevé, ce sont des émissions d'hydrocarbures qui sont augmentées, aggravant ainsi la pollution.

Cette augmentation de la richesse étant inacceptable dans le cadre d'une maîtrise de cette richesse pour respecter les normes anti-pollution, il faut donc, à chaque point de fonctionnement du moteur, diminuer le temps d'injection correspondant au taux d'EGR donné, d'une constante cartographiée. Or, cette constante cartographiée est adaptée à chaque valeur donnée d'ouverture de la vanne d'EGR, valeur prévue quand le système d'EGR fonctionne bien. Les vannes d'EGR classiques sont du type électropneumatique non bouclées en position, de sorte que si la vanne présente un dysfonctionnement et devient impilotable électroniquement, la correction de richesse prévue devient inadaptée sans qu'on en ait connaissance, puisque l'ouverture réelle de la vanne est inconnue.

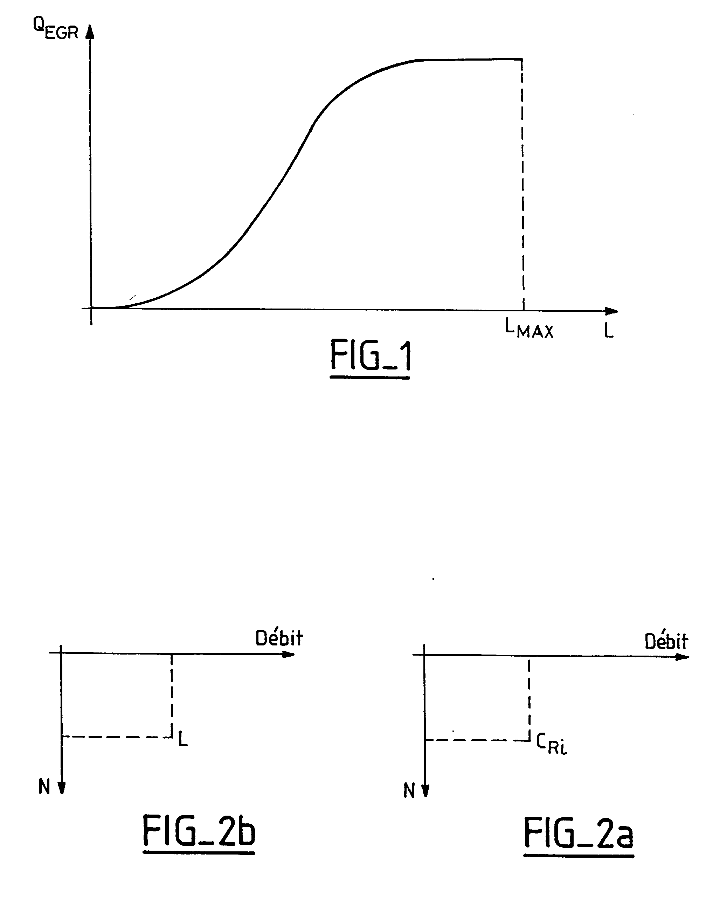

Il existe également des vannes d'EGR de type électrique à solénoïde, rebouclées en position, dont la caractéristique du débit $Q_{EGR}$ de gaz d'échappement réutilisés en fonction de la levée L du pointeau dans la vanne, modulant son ouverture, est représentée sur la figure 1. La position du pointeau dans la vanne est mesurée par un capteur, de type potentiomètre par exemple.

Cependant, ce type de vanne présente aussi des risques de défaillances, pouvant conduire à un mauvais taux d'EGR. Ces défaillances peuvent consister en un blocage du pointeau de la vanne dans son guide, ou bien concerner le circuit de commande électrique de puissance de la vanne, le circuit de contrôle de la position de la vanne en cas de rupture des fils du potentiomètre par exemple, ou encore le tuyau d'amenée des gaz d'échappement vers le collecteur par encrassement ou rupture.

Ces défaillances ont pour effet une dégradation de l'agrément de conduite et des performances en dépollution dans le cas où elles ont pour conséquence une diminution ou une augmentation du taux d'EGR par rapport au taux idéal pour le moteur. Dans le cas où ces défaillances conduisent à une mauvaise correction du temps d'injection quand l'augmentation de la pression collecteur par le système EGR n'est pas celle attendue, elles ont pour effet de mauvaises performances en dépollution.

En conséquence, la dégradation des performances d'anti-pollution est due à l'inadaptation du taux d'EGR au besoin du moteur, ainsi qu'à l'inadaptation de la correction de richesse nécessaire par rapport à la correction appliquée.

L'invention a pour but d'améliorer l'adéquation de la correction de la richesse en mode dégradé, c'est-à-dire lorsque le système de recirculation des gaz d'échappement est défaillant.

Pour cela, un premier objet de l'invention est un procédé de correction de la richesse du mélange air-carburant dans un moteur à combustion interne, à injection pilotée par un calculateur électronique en fonction du régime moteur et de la pression dans le collecteur d'admission d'air, et équipé d'un système de recirculation des gaz d'échappement EGR avec une vanne placée au niveau du collecteur d'admission, caractérisé en ce qu'il comporte les étapes suivantes :

- mesure de la levée L de la vanne par un capteur de position ;
- traitement de la valeur mesurée de la levée, par le calculateur électronique d'injection, par comparaison avec la commande de levée cartographiée en fonction du point de fonctionnement du moteur défini par le régime et le débit d'air entrant dans le moteur par le papillon ;
- vérification des conditions de fonctionnement du système de recirculation des gaz d'échappement ;
- délivrance en cas de détection du bon fonctionnement dudit système EGR, d'une consigne de levée et d'une consigne de correction de richesse selon deux premières cartographies ;
- délivrance en cas de détection d'une panne du système EGR, d'une correction de consigne de richesse calculée en fonction de la valeur mesurée de la levée, pour chaque point de fonctionnement du moteur.

Un second objet de l'invention est un dispositif de correction de la richesse du mélange air-carburant avec un moteur à combustion interne, à injection pilotée par un calculateur électronique en fonction du régime moteur et de la pression dans le collecteur d'admission d'air, et équipé d'un système de recirculation des gaz d'échappement EGR comprenant une vanne placée au niveau du collecteur d'admission, caractérisé en ce que la vanne est dotée d'un capteur de position et asservie en position par le calculateur électronique d'injection.

D'autres caractéristiques et avantages de l'invention apparaîtront à la lecture de la description suivante, illustrée, outre par la figure 1 déjà décrite, par les figures suivantes qui sont :

- figures 2a et 2b : deux exemples de cartographie de la correction de richesse et de la levée de la vanne, en fonction du débit d'air entrant dans le moteur par le papillon et du régime ;

- figure 3 : une coupe schématique d'une vanne électrique d'EGR ;

- figure 4 : le schéma de principe de la régulation de position ;

- figure 5 : la courbe de la correction de richesse en fonction de la levée de la vanne EGR.

- figures 6a et 6b : deux exemples de cartographie de la correction de richesse et de la levée de la vanne, selon l'invention ;

- figure 7 : la courbe de correction de richesse modélisée selon l'invention.

Dans un procédé de contrôle électronique de l'injection du carburant dans un moteur, suivant une loi en fonction de la pression dans le collecteur et du régime moteur, le temps d'injection $T_i$ est proportionnel à la pression collecteur $P_{col}$, selon l'expression :

$$T_i = K*P_{col}$$

Lorsque l'on réintroduit des gaz d'échappement dans le collecteur d'admission, on a vu que cela engendrait une élévation de la pression dans le collecteur, qui entraîne une augmentation de la richesse en carburant du mélange combustible par augmentation du temps d'injection. Il est donc nécessaire de diminuer le paramètre K de proportionnalité entre le temps d'injection $T_i$ et la pression $P_{col}$, pour compenser l'enrichissement naturel provoqué dans le système d'injection en pression et régime. Pour cela, la correction de richesse $C_R$ en présence de recirculation des gaz d'échappement se fait par l'intermédiaire d'une cartographie en débit d'air entrant dans le moteur au papillon et en régime, associée à une cartographie de levée L du pointeau dans la vanne EGR, établies pour chaque point de fonctionnement du moteur et implantées dans l'unité centrale du calculateur d'injection. Les figures 2a et 2b sont deux exemples de ces cartographies. Mais cette correction de richesse ainsi définie est réalisée en supposant que le système de recirculation des gaz d'échappement fonctionne bien et que la consigne de position demandée à la vanne est atteinte.

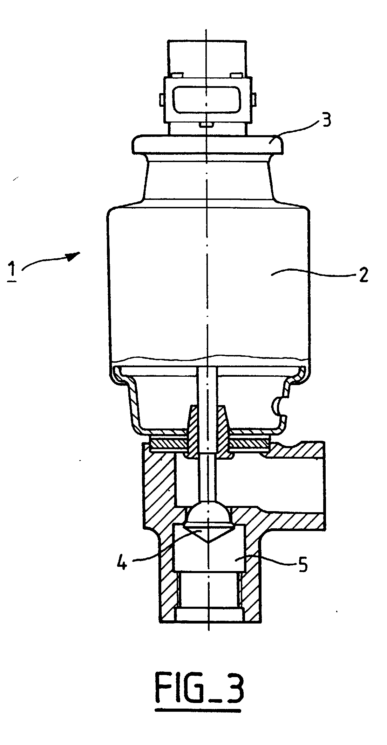

Une vanne d'EGR, de type électrique à solénoïde 2, comme celle représentée en coupe schématique sur la figure 3, destinée à être utilisée pour respecter les normes d'anti-pollution EU 2000, est un système bouclé en position puisqu'elle est dotée. d'un potentiomètre 3 de recopie de position. Grâce à ce potentiomètre, on connaît l'ouverture réelle absolue de la vanne POTEGR, correspondant à la levée d'un pointeau 4 dans un conduit 5.

La vanne totalement fermée correspondant à une valeur de tension délivrée par le potentiomètre non nulle, égale à CLOSEGR, l'asservissement de position de la vanne à une consigne de position CONSREGR assure que : POTEGR - CLOSEGR = CONSREGR.

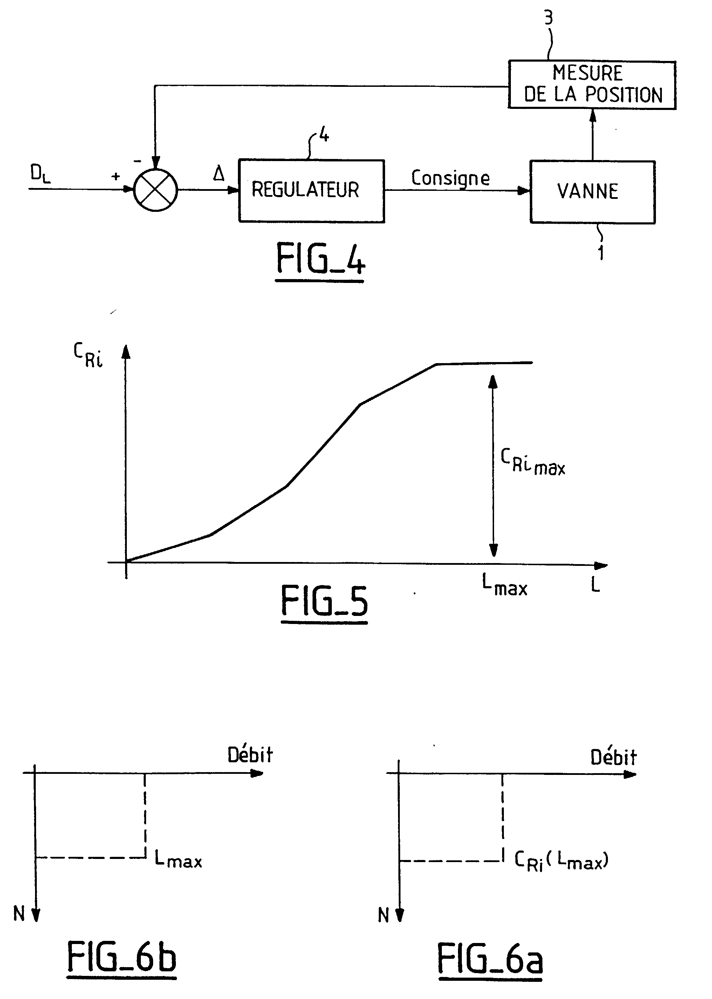

La figure 4 est un schéma fonctionnel de l'asservissement de la position de la vanne 1, dont le potentiomètre 3 de recopie de position mesure la levée réelle du pointeau, qui est alors comparée à la demande de levée $D_L$ faite par le calculateur en fonction du point de fonctionnement du moteur.

La différence entre les deux valeurs est introduite dans un régulateur 4, qui délivre une commande à la vanne, sous forme d'une consigne de courant pilotant la vanne. Ce régulateur positionne le pointeau à la valeur de consigne attendue en moins de 500 ms, mais si au bout d'un délai de 2 secondes, il n'a pas réussi à positionner le pointeau à la valeur attendue, on considère que la vanne est en panne.

La figure 1 déjà décrite représente les variations du débit $Q_{EGR}$ de la vanne en fonction de la levée L du pointeau.

Comme cela a été mentionné lors de l'énoncé des défaillances du système de recirculation des gaz d'échappement, le problème se situe quand la commande de puissance de la vanne ne permet pas de piloter la vanne pour faire varier la hauteur de la levée du pointeau. Cela correspond au cas d'une vanne mécaniquement coincée ou au cas d'une panne du circuit de commande, bloquant la vanne en position fermée ou en position ouverte.

Dans ce cas, la correction de richesse n'est plus établie à partir de la cartographie précédente valable quand le système de recirculation des gaz d'échappement marche, mais selon un autre protocole à partir d'une part de la mesure de la position du pointeau dans la vanne, ou levée, délivrée par le potentiomètre de la vanne, et d'autre part de l'allure de la caractéristique du débit de la vanne EGR en fonction de sa levée.

Les conditions pour pouvoir utiliser l'information de position relative de la vanne, en cas de blocage de la vanne ou de panne du circuit de commande sont les suivantes : il ne faut pas de panne électrique en cours sur le potentiomètre et un potentiomètre opérationnel, avec une vanne bloquée ou bien une panne électrique. Ces conditions étant remplies, le fonctionnement du système EGR est considéré comme mauvais et le protocole de correction de la richesse utilisé en présence d'EGR est arrêté. Le protocole de correction en mode dégradé utilise le fait que la courbe de correction de la richesse $C_{Ri}$ en fonction de la levée L de la vanne, établie pour un point de fonctionnement donné du moteur défini par le débit d'air entrant dans le moteur au papillon et par le régime, et représentée sur la figure 5, a la même forme sur tous les points de fonctionnement puisqu'elle dépend de la caractéristique de débit de la vanne représentée à la figure 1. La correction maximale $C_{Ri}$ ($L_{max}$) pour la pleine ouverture de la vanne, c'est-à-dire sa levée maximale $L_{max}$, dépend du point de fonctionnement du moteur, défini par le débit d'air dans le moteur au papillon et par le régime. De plus, ces courbes sont homothétiques.

On définit alors une courbe de référence, TBloi dont l'allure est tout d'abord obtenue par mesure sur banc moteur, pour un certain nombre de points de fonctionnement de la vanne, puis mémorisée sous forme d'une table de cartographie de référence.

Puis, pour chaque point moteur défini par la pression et le régime du moteur, donc sur chaque courbe de correction de richesse en fonction de la levée, on cherche la correction maximale $C_{Ri}$($L_{max}$) à la valeur de la levée $L_{max}$ de la vanne correspondante, et on mémorise chacune des deux valeurs dans deux cartographies en pression et régime moteur, comme représentées sur les figures 6a et 6b.

Ainsi, en cas de panne, le potentiomètre de la vanne délivre une valeur L de levée de la vanne au calculateur électronique qui calcule la correction de richesse $C_{Ri}$ à appliquer en fonction du point de fonctionnement.

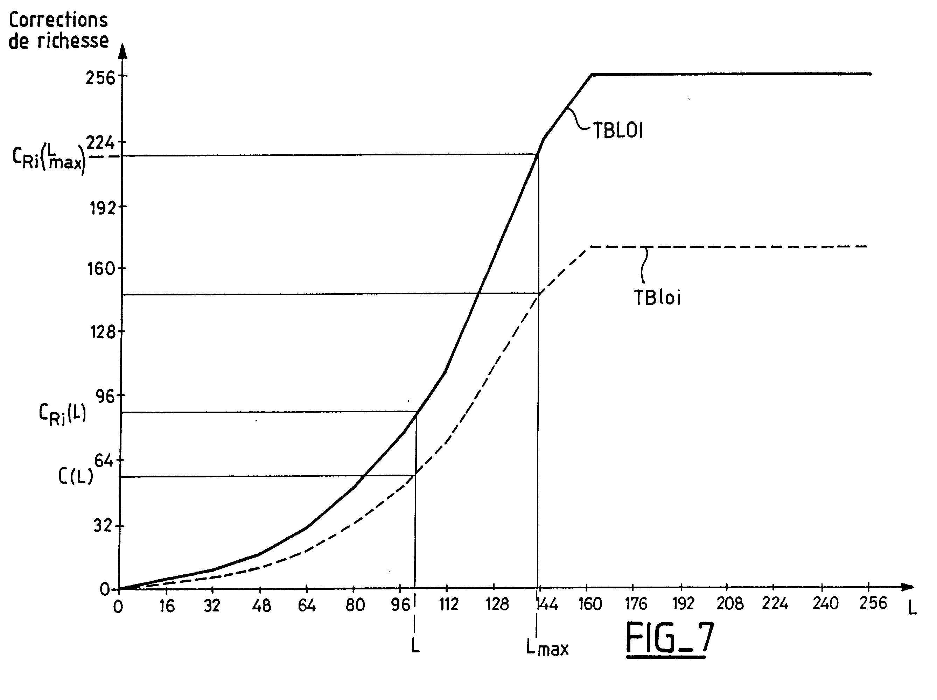

Comme le montre la figure 7, qui représente la courbe TBloi locale correspondant audit point de fonctionnement, en fonction de la levée L de la vanne, et la courbe TBLOI générale cartographiée en fonction de différentes valeurs de la levée, on constate que, pour un point de fonctionnement moteur donné, la valeur maximale $L_{max}$ de la levée correspond d'une part à une correction maximale $C_{Ri}$($L_{max}$) de la richesse selon la courbe TBLOI générale : $C_{Ri}(L_{max}) = f_{TBLOI}(L_{max})$, et à une correction de richesse maximale cartographiée C($L_{max}$) selon la courbe TBloi locale :

$$C(L_{max}) = f_{TBloi}(L_{max}).$$

De même, la valeur L de la levée mesurée par le potentiomètre correspond à une valeur de correction $C_{Ri}(L) = f_{TBloi}(L)$ par la courbe TBLOI générale, et à la valeur de correction de richesse $C(L) = f_{TBloi}(L)$ par la courbe TBloi locale. On en déduit donc que : $C(L) = C(L_{max}) * C_{Ri}(L)/C_{Ri}(L_{max})$.

Il faut bien entendu intégrer deux conditions pour éviter que des calibrations nulles ou trop faibles de la cartographie de la correction de richesse $C_{Ri}(L_{max})$ n'entraînent d'appauvrissement trop important du moteur. Il faut donc éviter une division par zéro et il faut également borner la correction de richesse C(L) à la plus grande valeur physique cohérente.

Ainsi, grâce à l'invention, une panne du système EGR reste beaucoup moins dégradante pour les émissions de polluants qui sont réglementées, car la correction de richesse reste adaptée à la levée réelle de la vanne. On ne perd en pollution que par l'augmentation ou la baisse du taux d'EGR par rapport au taux souhaité.

L'invention a pour avantages que la modélisation de la correction de richesse en fonction de la levée de la vanne est simple et juste nécessaire pour un pilotage en mode dégradé et que l'adaptation à une nouvelle vanne ne nécessite que des étapes de calibration. De plus, aucun capteur supplémentaire n'est nécessaire.

## Revendications

1. Procédé de correction de la richesse du mélange air-carburant dans un moteur à combustion interne, à injection pilotée par un calculateur électronique en fonction du régime moteur et de la pression dans le collecteur d'admission d'air, et équipé d'un système de recirculation des gaz d'échappement (EGR) avec une vanne placée au niveau du collecteur d'admission, caractérisé en ce qu'il comporte les étapes suivantes :

   - mesure de la levée (L) de la vanne (1) par un capteur de position (3) ;
   - traitement de la valeur mesurée de la levée, par le calculateur électronique d'injection, par comparaison avec la commande de levée cartographiée en fonction du point de fonctionnement du moteur défini par le débit d'air entrant dans le moteur pour le papillon et par le régime ;
   - vérification des conditions de fonctionnement du système de recirculation des gaz d'échappement ;
   - délivrance en cas de détection du bon fonctionnement dudit système de recirculation des gaz d'échappement, d'une consigne de levée et d'une consigne de correction de richesse ($C_R$) selon deux premières cartographies ;
   - délivrance en cas de détection d'une panne du système de recirculation des gaz d'échappement, d'une correction de consigne de richesse ($C_{Ri}$) calculée en fonction de la valeur mesurée de la levée, pour chaque point de fonctionnement du moteur.

2. Procédé de correction de la richesse du mélange air-carburant dans un moteur à combustion interne selon la revendication 1, caractérisé en ce qu'il consiste à établir, à l'initialisation du calculateur électronique d'injection :

- deux premières cartographies de consigne de levée (L) de la vanne et de consigne de correction de richesse ($C_R$), en fonction des points de fonctionnement du moteur définis par le régime (N) et la pression ($P_{col}$), ces consignes devant être appliquées dans les conditions de bon fonctionnement du système de recirculation des gaz d'échappement EGR ;
- une courbe de référence (TBLOI) de la correction de richesse ($C_{Ri}$) en fonction de la levée (L), dépendant de' la caractéristique de débit de la vanne en fonction de la levée, et cartographiée à partir de plusieurs valeurs de la levée ;
- deux secondes cartographies de la correction maximale de richesse {$C_{Ri}(L_{max})$} et de la levée ($L_{max}$) correspondante de la vanne, établies en fonction des points de fonctionnement du moteur en pression et régime.

3. Procédé de correction de richesse du mélange air-carburant dans un moteur à combustion interne selon la revendication 2, caractérisé en ce que, dans le cas de détection d'une panne du système de recirculation des gaz d'échappement, il consiste à calculer, par modélisation en fonction de la valeur mesurée de la levée (L) de la vanne, une consigne de correction de richesse {C(L)} à partir de la correction maximale de ($C_{Ri}(L_{max})$) de richesse cartographiée, de la correction de richesse de référence {$C_{Ri}(L)$} pour la valeur mesurée de la levée (L) et pour la valeur maximale de la levée ($L_{max}$) au point de fonctionnement moteur donné, selon l'expression :

$$C(L) = C(L_{max}) {}^* C_{Ri}(L)/C_{Ri}(L_{max})$$

4. Dispositif de correction de la richesse du mélange air-carburant dans un moteur à combustion interne, à injection pilotée par un calculateur électronique en fonction du régime moteur et de la pression dans le collecteur d'admission d'air, et équipé d'un système de recirculation des gaz d'échappement (EGR) comprenant une vanne placée au niveau du collecteur d'admission, mettant en oeuvre le procédé selon l'une des revendications 1 à 3, caractérisé en ce la vanne est dotée d'un capteur de position (3) et asservie en position par le calculateur électronique d'injection.

5. Dispositif de correction de la richesse du mélange air-carburant dans un moteur à combustion interne selon la revendication 4, caractérisé en ce que la vanne est du type électronique à solénoïde et en ce que le capteur de position est un potentiomètre de recopie de position.

FIG_1

FIG_2b

FIG_2a

FIG_3

3

MESURE
DE LA POSITION

4

$D_L$ + $\bigotimes$ − $\Delta$ REGULATEUR Consigne VANNE

1

## FIG_4

$C_{Ri}$

$C_{Ri\,max}$

$L_{max}$ L

## FIG_5

Débit

$L_{max}$

N

## FIG_6b

Débit

$C_{Ri}(L_{max})$

N

## FIG_6a

FIG_7

EP 0 884 466 A1

Office européen
des brevets

**RAPPORT DE RECHERCHE EUROPEENNE**

Numéro de la demande

EP 98 40 1434

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 428 355 A (YOKOOKU KATSUHIKO) 31 janvier 1984 * colonne 1, ligne 50 – colonne 2, ligne 19 * --- | 1,4,5 | F02D41/22 F02M25/07 F02D21/08 |
| A | US 5 629 852 A (YOKOYAMA ETSUYA ET AL) 13 mai 1997 * colonne 4, ligne 23 – colonne 5, ligne 2 * --- | 1 | |
| A | US 5 524 591 A (HIROTA TOSHIAKI ET AL) 11 juin 1996 * colonne 6, ligne 34 – colonne 8, ligne 33 * --- | 1-5 | |
| A | PATENT ABSTRACTS OF JAPAN vol. 010, no. 153 (M-484), 3 juin 1986 & JP 61 008436 A (NISSAN JIDOSHA KK), 16 janvier 1986 * abrégé * ----- | 1 | |

| | | | DOMAINES TECHNIQUES RECHERCHES (Int.Cl.6) |
|---|---|---|---|
| | | | F02D F02M |

Le présent rapport a été établi pour toutes les revendications

| Lieu de la recherche | Date d'achèvement de la recherche | Examinateur |
|---|---|---|
| LA HAYE | 29 septembre 1998 | Moualed, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................................
& : membre de la même famille, document correspondant

EPO FORM 1503 03.82 (P04C02)